# FASCICULE DE BREVET EUROPEEN

(11) **EP 0 432 003 B1**
(45) Date de publication et mention de la délivrance du brevet: **06.04.1994**
(21) Numéro de dépôt: 90403270.3
(22) Date de dépôt: 20.11.1990
(51) Int. Cl.: D04B 1/16, D03D 15/12

(54) **Nouveau matériau destiné notamment à être utilisé comme coupe-feu**
Neues Material, insbesondere bestimmt zum Gebrauch als Brandgasse
New material specially intended for use as a fire-break

(30) Priorité: 22.11.1989 FR 8915327
(43) Date de publication de la demande: 12.06.1991
(73) Titulaire: Royaerts, Didier, F-09600 Regat (FR)
(72) Inventeur: Rousset, Joseph, (FR); Royaerts, Didier, F-09600 Regat (FR)
(74) Mandataire: Faber, Jean-Paul

(56) Documents cités:
- EP-A- 0 097 335
- EP-A- 0 237 451
- FR-A- 2 390 117
- FR-A- 2 590 282
- GB-A- 2 152 542
- GB-A- 2 179 067
- GB-A- 2 191 792

## Description

La présente invention vise un nouveau matériau destiné à être utilisé comme coupe-feu.

L'invention vise plus particulièrement, mais non exclusivement, un matériau qui trouve une application intéressante pour constituer un pare-feu pour incendies de forêt.

On sait que les incendies de forêt se propagent notamment par rayonnement, le front de flamme dégageant une température qui favorise le dégagement d'éléments volatiles contenus dans les différentes essences d'arbres et particulièrement inflammables.

On a imaginé pour lutter contre ces incendies d'utiliser des barrières réalisées dans des matériaux apyres à base de fibres de céramique. De tels dispositifs n'ont pas donné les résultats escomptés, de plus ils sont très chers, pesants et d'une utilisation délicate. Enfin, ils ne constituent qu'un simple écran mécanique.

Le brevet anglais n° 2 191 792 décrit un tissu tissé formé d'un fil d'aramide et d'un fil pré-oxydé, ledit tissu étant destiné à la fabrication notamment de sièges d'avion.

Un tel tissu présente l'avantage de présenter une certaine élasticité, de ne pas se froisser, de réduire la perméabilité aux fumées et de résister au feu de manière à protéger la coque moulée du siège.

Un tel tissu ne peut constituer un bon coupe-feu.

L'un des buts de la présente invention est de réaliser un nouveau matériau léger d'un prix abordable et qui remédie aux inconvénients de la technique antérieure connue.

Le nouveau matériau, selon l'invention, se présente sous forme d'une nappe et est réalisé à partir d'un fil formé de deux matériaux synthétiques, soit de l'aramide et du préoxydé, caractérisé en ce que la nappe est constituée d'un tissu tricoté et que le fil présente une surface brillante avec des barbes ou fibrules formant un duvet à la surface dudit fil afin que le tissu tricoté forme un réseau d'éléments réfléchissants constituant un filtre optique dont les longueurs d'ondes de coupure correspondent à celles des rayonnements thermiques du spectre d'émission d'une flamme d'incendie.

Grâce à cette disposition, on réalise un tissu tricoté qui peut avoir une grande extension avec des trous relativement importants formés par les mailles et qui, grâce au duvet formé par l'opération de craquage, emprisonne une certaine quantité d'air qui constitue un isolant thermique naturel freinant ainsi la conduction de la chaleur, tandis que le duvet forme un filtre optique dont les longueurs d'onde de coupure correspondent à celles du rayonnement thermique du spectre d'émission de la flamme d'un incendie.

Ainsi, on réalise un tissu léger facile à mettre en oeuvre et qui, une fois tendu et posé, constitue une barrette coupe-feu réduisant au maximum le rayonnement d'un front de flamme.

Un tel tissu peut être obtenu par le procédé selon la revendication 2.

L'invention va maintenant être décrite en se référant à un mode de réalisation particulier donné à titre d'exemple seulement.

Le tissu, selon l'invention, est formé de fibres réalisées à partir d'un fil synthétique d'aramide connu dans le commerce sous le nom de "KEVLAR" et d'un fil synthétique préoxydé et connu dans le commerce sous le nom de "SIGRAFIL O".

Ces fils sont réalisés sous forme d'un ruban continu et le fil synthétique d'aramide est connu pour ses qualités de résistance mécanique et pour sa légèreté, tandis que le fil synthétique préoxydé a l'avantage d'être thermiquement stabilisé, d'être ininflammable et de ne pas fondre à la chaleur.

Ces fils subissent une opération de craquage de manière à les étirer jusqu'à leur rupture, la longueur des fibres obtenues après craquage étant comprise entre 60 mm et 200 mm.

Les fibres obtenues après craquage sont mélangées dans la proportion de 70% de fibres du fil synthétique préoxydé et de 30% de fibres du fil synthétique d'aramide.

On procède ensuite à un filage afin d'obtenir un fil qui est tricoté pour obtenir un tissu tricoté.

Ce tissu présente une certaine élasticité et le fil obtenu après craquage et filage présente l'avantage d'être à la fois résistant mécaniquement et de résister à la chaleur, la surface dudit fil étant duvetée.

Les fibres synthétiques ainsi craquées présentent une surface extrêment brillante dont l'aspect de surface est poli de sorte que les fibrules et petites barbes qui constituent le "duvet" de la surface du fil, forment un réseau d'éléments réfléchissants distants par leur échelle, et en moyenne, de un à quelques dizaines de microns. Cette disposition ainsi obtenue est susceptible de constituer un filtre optique dont les longueurs d'onde de coupure correspondent à celles du rayonnement thermique du spectre d'émission de la flamme d'un incendie.

Le tissu réalisé est utilisé tendu devant la surface à protéger et constitue ainsi un filtre par dispersion, diffusion ou diffraction dont le facteur de réflexion est très performant pour les longueurs d'ondes.

Des expériences qui ont été effectuées on a constaté que pour des températures de rayonnement comprises entre 300°C et 950°C on peut arrêter, environ, 90% du flux thermique.

Un tel tissu peut être utilisé sous forme de bandes cousues les unes aux autres de manière à réaliser des grandes longueurs, la largeur de ces bandes elles-mêmes pouvant être de six mètres, le poids d'une bande de cent mètres de longueur sur six mètres de hauteur étant de l'ordre de 60kg.

Lorsque le tissu est fabriqué avec un métier circulaire, on peut envisager de l'utiliser sous forme de boudins avec des éléments de tension logés intérieurement.

Le tissu, selon l'invention, a l'avantage de n'être pas complètement opaque de sorte qu'il permet de vérifier visuellement l'action des appareils d'extinction d'incendie et d'apprécier les risques de danger tels que la chute d'un arbre ou autre.

Un tel tissu peut également être utilisé pour la protection des bâtiments.

D'après les nombreux essais qui ont été faits, les meilleurs résultats ont été obtenus avec le nouveau matériau tel qu'il a été décrit et défini ci-dessus. Si le matériau, selon l'invention, est utilisé pour des applications dans lesquelles les températures de rayonnement sont plus basses, on peut envisager de remplacer le fil synthétique préoxydé per des fibres polyamides, polyesthers ou des fibres acryliques, ces fibres étant traitées de la même façon que le fil synthétique préoxydé.

## Revendications

1. Nouveau matériau se présentant sous forme d'une nappe et réalisé à partir d'un fil formé nappe matériaux synthétiques, soit de l'aramide et du préoxydé, caractérisé en ce que la nappe est constituée d'un tissu tricoté et que le fil présente une surface brillante avec des barbes ou fibrules formant un duvet à la surface dudit fil afin que le tissu tricoté forme un réseau d'éléments réfléchissants constituant un filtre optique dont les longueurs d'ondes de coupure correspondent à celles des rayonnements thermiques du spectre d'émission d'une flamme d'incendie.

2. Procédé de fabrication d'un nouveau matériau destiné à être utilisé comme coupe-feu, selon la revendication 1, qui consiste à sélectionner un premier matériau synthétique formé d'un fil d'aramide et un second matériau synthétique formé d'un fil préoxydé, caractérisé en ce qu'il consiste à procéder au craquage du premier et du second matériau de manière à obtenir des fibres ayant une longueur de l'ordre de 60 à 200 mm, à mélanger lesdites fibres, à filer celles-ci pour obtenir un fil brillant avec des barbes ou fibrules et à tricoter ledit fil.

3. Procédé, selon la revendication 2, caractérisé en ce qu'on mélange les fibres après craquage dans la proportion de 70 % de fibres du fil synthétique préoxydé et de 30% de fibres du fil synthétique d'aramide.

## Patentansprüche

1. Ein neues Material in Form eines Vlieses, hergestellt aus einem aus zwei synthetischen Materialien gebildeten Garn, sei es aus Aramid und aus präoxidiertem Material, dadurch gekennzeichnet, daß das Vlies aus einem Trikotgewebe gebildet ist und daß das Garn eine glänzende Oberfläche aufweist mit Faserbärten oder Fäserchen, die auf der Oberfläche des genannten Garns einen Flausch bilden, damit das Trikotgewebe ein Netz aus reflektierenden Elementen bildet, die einen optischen Filter darstellen, dessen Schnittwellenlängen mit denen der Wärmestrahlung des Emissionsspektrums von Brandflammen übereinstimmen.

2. Verfahren zur Herstellung eines neuen Materials zur Verwendung als Brandschutz gemäß Anspruch 1, das darin besteht, ein erstes synthetisches Material, gebildet aus einem Aramidgarn, und ein zweites synthetisches Material, gebildet aus einem präoxidierten Garn auszuwählen, dadurch gekennzeichnet, daß es darin besteht, das erste und das zweite Material so zu kracken, daß Fasern mit einer Länge in der Größenordnung von 60 bis 200 mm erhalten werden, die genannten Fasern zu vermischen, diese zu verspinnen, um ein glänzendes Garn mit Faserbärten oder Fäserchen zu erhalten und das genannte Garn zu verstricken.

3. Verfahren nach Anspruch 2, dadurch gekennzeichnet, daß die Fasern nach dem Kracken im Verhältnis von 70% Fasern aus synthetischem präoxidiertem Garn und 30% Fasern aus synthetischem Aramidgarn vermischt werden.

## Claims

1. A new material which appears in the form of a sheet and is produced from a thread formed from two synthetic materials, say, aramide and preoxide, characterized in that the sheet consists of a knitted tissue and in that the thread exhibits a shiny surface with barbs or "fluffs" which form a nap at the surface of the said thread so that the knitted tissue shall form a network of reflecting elements creating an optical filter the cutoff wavelengths of which correspond with those of the thermal radiations in the emission spectrum of a flame from a blaze.

2. A method of manufacture of a new material as in Claim 1, intended for use as a firebreak, the method consisting in selecting a first synthetic material formed from an aramide thread and a second synthetic material formed from a preoxide thread, characterized in that it consists in proceeding to split the first and second materials so as to obtain fibres having a length of the order of from 60 to 200 mm, in mixing the said fibres, in spinning them in order to obtain a shiny thread with barbs or "fibrules", and in knitting the said thread.

3. A method as in Claim 2, characterized in that after the splitting the fibres are mixed in the proportion of 70% of fibres from the preoxide synthetic thread and 30% of fibres from the aramide synthetic thread.
